# EUROPÄISCHE PATENTSCHRIFT

(11) **EP 1 937 431 B1**
(45) Veröffentlichungstag und Bekanntmachung des Hinweises auf die Patenterteilung: **01.09.2010**
(21) Anmeldenummer: 06805987.2
(22) Anmeldetag: 02.10.2006
(51) Int. Cl.: B22D 11/128

(54) **VERFAHREN ZUR HERSTELLUNG EINER STRANGFÜHRUNGSROLLE**
METHOD FOR PRODUCING A STRAND-GUIDING ROLLER
PROCEDE POUR REALISER UN ROULEAU DE GUIDAGE DE BARRE

(30) Priorität: 20.10.2005 AT 17182005
(43) Veröffentlichungstag der Anmeldung: 02.07.2008
(73) Patentinhaber: Siemens VAI Metals Technologies GmbH & Co, 4031 Linz (AT)
(72) Erfinder: MOERWALD, Karl, A-4490 St. Florian (AT)
(74) Vertreter: Maier, Daniel Oliver
(86) Internationale Anmeldenummer: PCT/EP2006/009542
(87) Internationale Veröffentlichungsnummer: WO 2007/045351

(56) Entgegenhaltungen:
- DE-B3-102004 002 529
- JP-A- 10 006 001
- US-A- 4 532 978

## Beschreibung

Die Erfindung betrifft ein Verfahren zur Herstellung einer Strangführungsrolle für eine Stranggießanlage aus vorgefertigten und teilbearbeiteten in einem Lager vorrätigen Bauteilen. Weiters betrifft die Erfindung eine nach dem Herstellverfahren hergestellte Strangführungsrolle und deren Verwendung.

Strangführungsrollen werden in einer Stranggießanlage zum Führen und Stützen eines aus einer Stranggießkokille austretenden, zumindest teilerstarrten Metallstranges verwendet und sind als solche in vielen unterschiedlichen Bauarten bekannt. In Abhängigkeit von der Breite des gegossenen Metallstranges sind Strangführungsrollen zweifach oder auch mehrfach gelagert und weisen dementsprechend unterschiedliche Ballenlängen auf. Speziell beim Gießen von Metallsträngen mit großer Breite und Dicke werden mehrfach gelagerte Strangführungsrollen eingesetzt, bei denen in Gießrichtung aufeinander folgende Rollen zueinander versetzte Lagerstellen aufweisen, um eine gute flächige Abstützung des Stranges zu gewährleisten. Dies führt zwangsweise zu unterschiedlichen Ballenlängen.

Auch der strukturelle Aufbau bekannter Strangführungsrollen ist unterschiedlich und sehr wesentlich durch die Kühlmittelführung im Inneren des Rollenkörpers geprägt. Unmittelbar nach dem Austritt des Metallstranges aus der Kokille ist ein möglichst dichter Besatz der Strangführung mit Strangführungsrollen notwendig (geringe Rollenteilung), um Bulging zu vermeiden. Mit zunehmendem Abstand von der Kokille kann die Rollenteilung größer werden. Dadurch ergibt sich in der Strangführung ein Rollenkorsett mit Strangführungsrollen unterschiedlichen Durchmessers.

Unter der Einwirkung des heißen und schweren Metallstranges sind die Strangführungsrollen hohen thermischen und mechanischen Belastungen ausgesetzt, die eine laufende Instandhaltung und damit Wechselarbeiten an der Stranggießanlage erfordern.

Unter diesen Einflüssen besteht für den Anlagenbetreiber der Bedarf nach einem ausreichenden Ersatzrollenlager mit allerdings unerwünschten Lagerhaltungskosten. Anlagenbetreiber haben daher das Bestreben, dieses Problem zu den Rollenherstellern zu verlagern und im Bedarfsfall eine kurzfristige möglichst unmittelbare Ersatzteillieferung (just-in-time-Lieferung) einzufordern. Dies erfordert bei den Rollenherstellern eine auf viele Anlagenbetreiber abgestimmte Rollenlagerhaltung, die durch die Vielzahl von Anlagentypen und Rollensysteme mit teilweise nur geringen Dimensionsunterschieden ausufert oder entsprechende Konzepte für eine kurzfristige Rollenherstellung und Montage erfordert.

Üblicherweise erfolgt die komplette Fertigung von Strangführungsrollen nach dem Eingang entsprechender Erstausstattungsaufträge und Ersatzteilaufträge anhand der Fertigungszeichnungen. Die notwendigen, langen Fertigungszeiten erfordern eine begrenzte Lagerwirtschaft zur Aufrechterhaltung einer ungestörten Produktion auf der Stranggießanlage.

Aus der DE 10 2004 002 529 B3 ist es bereits bekannt, innengekühlten Stütz- und/oder Transportrollen aus standardisierten Baukastenmodulen, bestehend aus Lagerzapfen, Mantel und Kern, aufzubauen. Die Baukastenmodule sind in einem Vorzugsmaßraster als Größenreihe nach Standardlänge und Standarddurchmesser zweidimensional sortiert und zusammengestellt. Durch die Zweidimensionalität dieser vorgeschlagenen Lagerhaltung erreicht diese trotzdem eine beachtliche Größe mit unerwünscht großen Lagerhaltungskosten. Weiters wird ein Lagerhaltungssystem mit einer eingeschränkten Zweidimensionalität vorgeschlagen, bei dem Module mit Standardlängen erzeugt werden, deren Längenverleilung statistisch ermittelt wird und die erst im konkreten Anwendungsfall auf das geforderte Längenmaß zugeschnitten werden. Die eingeschränkte Zweidimensionalität erhöht den Ausschussanteil am teuren Rollenmantelmaterial umso mehr, als die Anzahl der Standardlängenmodule verringert wird. Außerdem ist es nicht möglich, dem Anlagenbetreiber fertig montierte und unmittelbar einbaubare Strangführungsrollen zu liefern, da insbesondere bei mehrfach gelagerten Rollen eine Montage der Rollenlager nur bei zerlegten Strangführungsrollen möglich ist, außer es werden teure geteilte Lager verwendet.

Aufgabe der Erfindung ist es daher, die Nachteile des bekannten Standes der Technik zu vermeiden und ein Verfahren zur Herstellung einer Strangführungsrolle vorzuschlagen, bei dem in sehr kurzer Zeit aus vorgefertigten und teilbearbeiteten, in einem Warenlager bereitliegenden Bauteilen eine für den Einbau in eine Stranggießanlage montagefertige Strangführungsrolle hergestellt und geliefert werden kann. Das hierfür benötigte Lager beim Rollenhersteller soll möglichst klein gehalten werden.

Die der Erfindung zugrunde liegende Aufgabe wird ausgehend von einem Verfahren der eingangs beschriebenen Art durch die Merkmale des Anspruchs 1 gelöst.

Das Verfahren zur Herstellung von Strangführungsrollen für eine Stranggießanlage aus vorgefertigten und teilbearbeiteten in einem Lager bereitliegenden Bauteilen, die vorzugsweise zumindest Rollenlager, vorgefertigte Stützwellen und teilbearbeitetes Rollenmantel-Ausgangsmaterial, sowie diverses Kleinmaterial und zusätzliche Ein- und Anbauteile, umfassen, führt dann zu einer in kürzester Zeit lieferbaren Strangführungsrolle, wenn Rollenlager entsprechend den auftretenden Belastungen in einer Baureihe auf Lager liegen, wenn die Rollenlager tragenden Stützwellen entsprechend den auftretenden Belastungen in einer Baureihe auf Lager liegen, wenn Rollenmäntel als umfangsbearbeitetes Stangen- oder Rohrmaterial in einer auf verschiedene Rollendurchmesser abgestimmten Baureihe mit einer Länge von 6 m bis 8 m auf Lager liegen, wobei für den Zusammenbau einer bestimmten Strangführungsrolle ein Rollenmantel mit einem Rollendurchmesser entsprechend der Baureihe von den umfangsbearbeiteten Stangen- oder Rohrmaterial entsprechend der vorgesehenen Ballenlänge abgetrennt, endbearbeitet und mit den weiteren aus den Baureihen ausgewählten Bauteilen zu einer Strangführungsrolle montiert wird.

Durch eine Lagerhaltung der Rollenmäntel in Form von Stangen- oder Rohmaterial in einer Länge von 6 m bis 8 m, wobei lediglich die Mantelfläche (Durchmesser) vorbearbeitet ist, können Abschnitte entsprechend der für die herzustellende Strangführungsrolle benötigten Ballenlänge abgelängt und in sehr kurzer Zeit stirnseitig endbearbeitet werden. Diese Endbearbeitung umfasst das Abdrehen der Stirnflächen und die Herstellung der Verbindungssitze für die Aufnahme eines Stützwellenzapfens vorzugsweise auf einen Durchmesser, der eine drehfeste Schrumpfverbindung mit dem Stützwellenzapfen ermöglicht. Insbesondere bei mehrfach gelagerten Strangführungsrollen liegen die Ballenlängen der einzelnen Rollenmäntel zwischen 500 mm und 800 mm, fallweise erreichen sie auch 1000 mm und darüber. Damit können bei entsprechend langem Stangen- oder Rohrmaterial eine größere Zahl von Rollenmäntel abgelängt und der Abfallanteil sehr gering gehalten werden.

Nach einer vorteilhaften Ausgestaltung des Verfahrens wird auf die Mantelfläche des Stangen- oder Rohrmaterials eine verschleißfeste Oberflächenschicht, vorzugsweise durch Auftragsschweißung, aufgebracht und das Stangen- oder Rohrmaterial anschließend auf den Rollendurchmesser entsprechend der Baureihe abgedreht. Gegebenenfalls erfolgt zusätzlich eine Wärmebehandlung zum Spannungsabbau und zur Einstellung der Gefügestruktur im Mantel des Stangen- oder Rohrmaterials.

Die Endbearbeitung des abgelängten Rollenmantels umfasst gegebenenfalls auch das Herstellen von Kühlmittelleitungen. Die Kühlmittelleitung kann hierbei als zentrale Kühlmittelleitung z.B. durch eine zentrale Bohrung im abgelängten Stangenmaterialstück oder Ausdrehung des abgelängten Rohrmaterialstückes hergestellt werden. Bei einer Peripheriekühlung (Revolverkühlung) werden noch die entsprechenden peripheren Kühlmittelkanäle und Stichleitungen gebohrt.

Als besonders wirtschaftlich erweist sich das vorgeschlagenen Verfahren, wenn die in einer Stranggießanlage vorgesehenen oder angeordneten Strangführungsrollen in Abhängigkeit von den auf sie einwirkenden Belastungen entsprechend einer vorgegebenen Baureihe dimensioniert sind. Dies wird zweckmäßig bereits bei der Planung und Errichtung der Stranggießanlage geplant, kann aber auch durch eine entsprechende Nachrüstung bei einer bestehenden Stranggießanlage erfolgen.

Die nach dem vorgeschlagenen Verfahren hergestellte Strangführungsrolle bildet einen unabhängigen Wechselteil einer Stranggießanlage. Eine während des laufenden Anlagenbetriebes beschädigte oder verschlissene Strangführungsrolle kann nach Lösen der Befestigungsmittel der Lagergehäuse am Traggestell der Stranggießanlage aus der Anlage entfernt und durch eine kurzfristig gelieferte Strangführungsrolle ersetzt werden. Vormontagearbeiten in den Werkstätten des Anlagenbetreibers entfallen.

Vorteile und Merkmale der vorliegenden Erfindung ergeben sich auch aus der nachfolgenden Beschreibung eines nicht einschränkenden Ausführungsbeispieles; wobei auf die beiliegenden Figuren Bezug genommen wird, die folgendes zeigen:
- Fig. 1: ein schematischer Längsschnitt durch eine Strangführungsrolle hergestellt nach dem erfindungsgemäßen Verfahren,
- Fig. 2: schematisch Darstellung der Lagerwirtschaft, eines Teilfertigungsbereiches und eines Montagebereiches für die Herstellung der erfindungsgemäßen Strangführungsrolle.

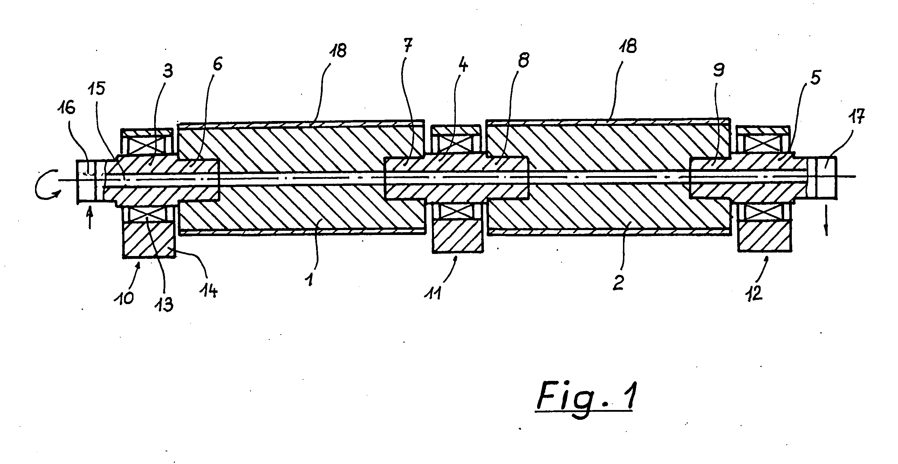

Figur 1 zeigt in einer schematischen Darstellung eine dreifach gelagerte Strangführungsrolle, wie sie in der Strangführung einer Stranggießanlage verwendet wird und die nach dem erfindungsgemäßen Verfahren aus Normbauteilen, vorgefertigten Bauteilen und aus teilbearbeiteten Bauteilen hergestellt und montiert ist. Die Strangführungsrolle umfasst zwei Rollenmäntel 1, 2, die auf Stützwellen 3, 4, 5 abgestützt sind. Die Stützwellen münden in Stützwellenzapfen 6, 7, 8, 9, die in Ausnehmungen der Rollmäntel ragen und mit diesen eine drehfeste Verbindung bilden, beispielsweise eine Schrumpfverbindung. Die Stützwellen 3, 4, 5 sind in Rollenlager 10, 11, 12, bestehend aus einem Wälzlager 13 und einem Lagerbock 14, abgestützt. Als Wälzlager kommen vorzugsweise Pendelrollenlager und CARB-Lager in Frage. Die Strangführungsrolle ist von einem zentralen durchgehenden Kühlmittelkanal 15 durchsetzt und stirnseitig mit Drehdurchführungen 16, 17 für die Zuleitung und Ableitung eines Kühlmittels verbunden. Die Rollenmäntel 1, 2 weisen eine verschleißfeste Oberflächenschicht 18 auf, die die Lebensdauer der Strangführungsrolle erhöht.

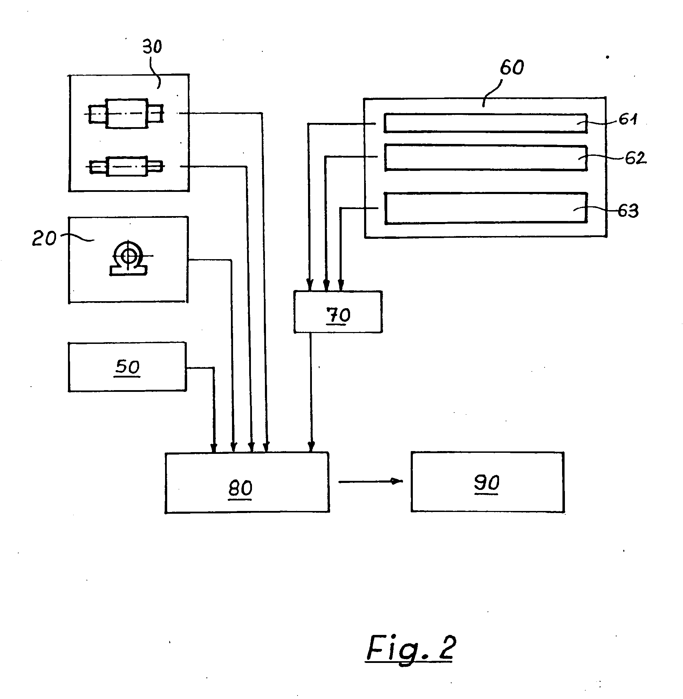

Um die Herstellzeit einer derartigen Strangführungsrolle bei gleichzeitig geringen Lagerhaltungskosten und Lagerraum zu minimieren werden die Einzelkomponenten der Strangführungsrollen in einem Bauteilelager teilweise vorgefertigt und teilweise teilbearbeitet bereit gehalten. Figur 2 veranschaulicht das Lager und die Herstell- bzw. Montageschritte. Rollenlager 10, 11, 12 als Normbauteile werden baureihenkonform in einem Lagerbereich 20, Stützwellen 3, 4, 5 als vorgefertigte Bauteile werden baureihenkonform in einem Lagerbereich 30, diverses Kleinmaterial und sonstige Ein- und Anbauteile, wie Dichtungen, Drehdurchführungen und ähnlichem werden in einem Lagerbereich 50 montagefertig gelagert. Im Lagerbereich 60 ist umfangsbearbeitetes, gegebenenfalls mit einer Verschleißschicht ummanteltes Stangen- oder Rohrmaterial 61, 62, 63 sortiert nach unterschiedlichen Durchmessern entsprechend der vorgesehenen Baureihen gelagert. Bei der Herstellung einer speziellen Strangführungsrolle wird entsprechend dem vorbestimmten Rollenmantel-Durchmesser vom Stangen- oder Rohrmaterial ein der benötigten Ballenlänge des Rollenmantels entsprechendes Rollenmantelstück in der Werkstätte 70 abgelängt und endbearbeitet. Am Montageplatz 80 werden die einzelnen benötigten Bauteile aus den Lagerplätzen 20, 30, 50, 60 und der Werkstätte 70 zusammengeführt und montiert. Den Montageplatz 80 verlässt eine komplett montierte Strangführungsrolle, die beim Anlagenbetreiber ohne weitere Vormontagearbeiten in die Stranggießanlage 90 eingesetzt, in seiner Position zu den weiteren Strangführungsrollen ausgerichtet und befestigt werden kann.

Beispielsweise können bei einer dreifach gelagerten Strangführungsrolle, wie sie in Figur 1 dargestellt ist, die Ballenlänge des einen Rollenmantels 520 mm und die Ballenlänge des weiteren, in axialer Richtung fluchtenden Rollenmantels 750 mm betragen. Bei der in der Strangführung einer Stranggießanlage in Strangförderrichtung nachfolgenden Strangführungsrolle könnte die Reihenfolge der Rollenmäntel mit unterschiedlicher Ballenlänge wechseln und solcherart eine flächige Abstützung des Gussstranges erreicht werden, da die mittleren Lager nicht in Strangförderrichtung fluchten. Die Lagerhaltung der vorgefertigten Roflenmäntel in Form möglichst langer Stangen bzw. Rohre ermöglicht die Minimierung des Lagerbestandes und der nicht mehr verwendbaren Restlängenabschnitte.

Das erfindungsgemäße Verfahren kann bei zweifach gelagerten Strangführungsrollen gleichermaßen wie bei beliebig mehrfach gelagerten Strangführungsrollen eingesetzt werden.

## Patentansprüche

1. Verfahren zur Herstellung von Strangführungsrollen für eine Stranggießanlage aus vorgefertigten und teilbearbeiteten in einem Lager (20, 30, 50, 60) bereitliegenden Bauteilen, die zumindest Rollenlager (10, 11, 12), vorgefertigte Stützwellen (3, 4, 5) und teilbearbeitetes Rollenmantel-Ausgangsmaterial (61, 62, 63) , sowie diverses Kleinmaterial und zusätzliche Ein- und Anbauteile, umfassen,
wobei Rollenlager (10, 11, 12) entsprechend den auftretenden Belastungen in einer Baureihe auf Lager liegen,
wobei Rollenlager (10, 11, 12) tragende Stützwellen (3, 4, 5) entsprechend den auftretenden Belastungen in einer Baureihe auf Lager liegen,
wobei Rollenmäntel (1, 2) als umfangsbearbeitetes Stangen- oder Rohrmaterial (61, 62, 63) in einer auf verschiedene Rollendurchmesser abgestimmten Baureihe auf Lager liegen
**dadurch gekennzeichnet, dass**
die Rollenmäntel (1, 2) als umfangsbearbeitetes Stangen- oder Rohrmaterial mit einer Länge von 6 m bis 8 m auf Lager liegen,
wobei für den Zusammenbau einer bestimmten Strangführungsrolle ein Rollenmantel (1, 2) mit einem Rollendurchmesser entsprechend der Baureihe von den umfangsbearbeiteten Stangen- oder Rohrmaterial (61, 62, 63) entsprechend der vorgesehenen Ballenlänge abgetrennt, endbearbeitet und mit den weiteren aus den Baureihen ausgewählten Bauteilen zu einer Strangführungsrolle montiert wird.

2. Verfahren nach Anspruch 1, **dadurch gekennzeichnet, dass** auf die Mantelfläche des Stangen- oder Rohrmaterials (61, 62, 63) eine verschleißfeste Oberflächenschicht (18) aufgebracht wird und anschließend ein Abdrehen auf den Rollendurchmesser entsprechend der Baureihe erfolgt.

3. Verfahren nach Anspruch 2, **dadurch gekennzeichnet, dass** die verschleißfeste Oberflächenschicht (18) durch Auftragsschweißung auf die Mantelfläche des Stangen- oder Rohrmaterials (61, 62, 63) aufgebracht wird.

4. Verfahren nach einem der vorhergehenden Ansprüche, **dadurch gekennzeichnet, dass** die Endbearbeitung des Rollenmantels (1, 2) das Abdrehen der Stirnflächen und die Herstellung der Verbindungssitze für die Aufnahme von Stützwellenzapfen (6, 7, 8, 9) umfasst.

5. Verfahren nach Anspruch 4, **dadurch gekennzeichnet, dass** die Endbearbeitung des Rollenmantels (1, 2) zusätzlich das Herstellen von Kühlmittelleitungen umfasst.

6. Verfahren nach einem der vorhergehenden Ansprüche, **dadurch gekennzeichnet, dass** die in einer Stranggießanlage vorgesehenen oder angeordneten Strangführungsrollen in Abhängigkeit von den auf sie einwirkenden Belastungen entsprechend einer vorgegebenen Baureihe dimensioniert sind.

## Claims

1. Method for producing strand guiding rollers for a continuous casting plant from prefabricated and semifinished components that are kept in stock (20, 30, 50, 60), which comprise at least roller bearings (10, 11, 12), prefabricated supporting shafts (3, 4, 5) and semifinished roller shell starting material (61, 62, 63), as well as various small items and additional internal and add-on parts,
wherein roller bearings (10, 11, 12) are in stock in a type series in accordance with the loads occurring,
wherein supporting shafts (3, 4, 5) carrying the roller bearings (10, 11, 12) are in stock in a type series in accordance with the loads occurring,
wherein roller shells (1, 2) are in stock in the form of circumferentially worked bar or tube material (61, 62, 63) in a type series made to match various roller diameters,
**characterized in that**
the roller shells (1, 2) are in stock in the form of circumferentially worked bar or tube material with a length of 6 m to 8 m,
wherein, for the assembly of a specific strand guiding roller, a roller shell (1, 2) with a roller diameter in accordance with the type series is cut off from the circumferentially worked bar or tube material (61, 62, 63) in accordance with the type series to correspond to the intended body length, finished and assembled with the other components selected from the type series to form a strand guiding roller.

2. Method according to Claim 1, **characterized in that** a wear-resistant surface layer (18) is applied to the lateral surface of the bar or tube material (61, 62, 63), preferably by build-up welding, and the bar or tube material is subsequently turned on a lathe to the roller diameter in accordance with the type series.

3. Method according to Claim 2, **characterized in that** the resistant surface layer (18) is applied to the lateral surface of the bar or tube material (61, 62, 63) by build-up welding.

4. Method according to one of the preceding claims, **characterised in that** the finishing of the roller shell (1, 2) comprises turning the end faces on a lathe and producing the connecting seats for receiving supporting shaft journals (6, 7, 8, 9).

5. Method according to Claim 4, **characterized in that** the finishing of the roller shell (1, 2) additionally comprises the production of coolant lines, preferably a central coolant line.

6. Method according to one of the preceding claims, **characterized in that** the strand guiding rollers provided or arranged in a continuous casting plant are dimensioned in dependence on the loads acting on them in accordance with a predetermined type series.

## Revendications

1. Procédé de fabrication de rouleaux de guidage de barre pour une installation de coulée continue à partir de composant préfabriqués et partiellement usinés fournis dans un support (20, 30, 50, 60), qui comprennent au moins des paliers à rouleaux (10, 11, 12), des arbres de support préfabriqués (3, 4, 5) et un matériau de départ d'enveloppe de rouleau partiellement usiné (61, 62, 63), ainsi que diverses petites pièces et des composants supplémentaires à insérer ou rapportés,
les paliers à rouleaux (10, 11, 12) se trouvant en fonction des contraintes présentes, alignés en rangée sur des supports,
des arbres de support (3, 4, 5) portant les paliers à rouleaux (10, 11, 12) se trouvant en fonction des contraintes présentes, alignés en rangée sur des supports,
des enveloppes de rouleaux (1, 2) réalisées sous forme de matériau en barre ou tubulaire usiné sur la périphérie (61, 62, 63) se trouvant sur des supports dans une rangée adaptée à différentes diamètres de rouleaux,
**caractérisé en ce que**
les enveloppes de rouleaux (1, 2) sous forme de matériau en barre ou tubulaire usiné sur la périphérie, d'une longueur de 6 m à 8 m, sont situées sur des supports,
une enveloppe de rouleau (1, 2) avec un diamètre de rouleau correspondant à la rangée de matériau en barre ou tubulaire usiné sur la périphérie (61, 62, 63), pour l'assemblage d'un rouleau de guidage de barre déterminé, étant sectionnée en fonction de la longueur de corps prévue, puis finie par usinage, et montée avec les autres composants choisis dans les rangées pour former un rouleau de guidage de barre.

2. Procédé selon la revendication 1, **caractérisé en ce qu'**une couche superficielle (18) résistant à l'usure est appliquée sur la surface d'enveloppe du matériau en barre ou tubulaire (61, 62, 63), et **en ce qu'**un tournage est ensuite réalisé au diamètre de rouleau correspondant à la rangée.

3. Procédé selon la revendication 2, **caractérisé en ce que** la couche superficielle (18) résistant à l'usure est appliquée par soudage d'apport sur la surface d'enveloppe du matériau en barre ou tubulaire (61, 62, 63).

4. Procédé selon l'une quelconque des revendications précédentes, **caractérisé en ce que** l'usinage de finition de l'enveloppe de rouleau (1, 2) inclut le tournage des faces frontales et la fabrication des sièges de connexion pour recevoir des tourillons d'arbre de support (6, 7, 8, 9).

5. Procédé selon la revendication 4, **caractérisé en ce que** l'usinage de finition de l'enveloppe de rouleau (1, 2) comprend en outre la fabrication de conduites de fluide de refroidissement.

6. Procédé selon l'une quelconque des revendications précédentes, **caractérisé en ce que** les rouleaux de guidage de barre prévus ou disposés dans une installation de coulée continue sont dimensionnés en fonction des contraintes agissant sur eux, de manière correspondant à une rangée prédéfinie.
